(19) **Europäisches Patentamt / European Patent Office / Office européen des brevets**

(11) **EP 1 986 424 A1**

(12) **EUROPEAN PATENT APPLICATION**
published in accordance with Art. 158(3) EPC

(43) Date of publication:
**29.10.2008 Bulletin 2008/44**

(51) Int Cl.:
***H04N 5/335*** (2006.01)

(21) Application number: **06834189.0**

(22) Date of filing: **07.12.2006**

(86) International application number:
**PCT/JP2006/324434**

(87) International publication number:
**WO 2007/091369 (16.08.2007 Gazette 2007/33)**

(84) Designated Contracting States:
**DE**

(30) Priority: **10.02.2006 JP 2006033208**

(71) Applicant: **Sharp Kabushiki Kaisha**
**Osaka-shi, Osaka 545-8522 (JP)**

(72) Inventors:
• **SHIBANO, Toshinobu**
**Fukuyama-Shi, Hiroshima 721-0973 (JP)**

• **HASHIGUCHI, Kazuo**
**Ikoma-Shi, Nara 630-0121 (JP)**

(74) Representative: **Brown, Kenneth Richard et al**
**R.G.C. Jenkins & Co.**
**26 Caxton Street**
**London SW1H 0RJ (GB)**

(54) **FIXED-PATTERN NOISE ELIMINATING DEVICE, SOLID-STATE IMAGE PICKUP DEVICE, ELECTRONIC APPARATUS, AND FIXED-PATTERN NOISE ELIMINATING PROGRAM**

(57)     A fixed-pattern noise elimination apparatus 4 eliminates a fixed-pattern noise component resulting from dark current out of an image signal outputted from an effective pixel of a solid-state image sensor 2 during image sensing, by using: a first dark current that is calculated based on a previously acquired signal outputted from a light-shielded pixel of the solid-state image sensor 2 and that is stored in a compensation data memory 6; a second dark current that is calculated based on a previously acquired signal outputted from the effective pixel of the solid-state image sensor 2 with no incident light and that is stored in the compensation data memory 6; and a third dark current that is calculated based on a signal outputted from the light-shielded pixel of the solid-state image sensor 2 during image sensing. With this configuration, a fixed-pattern noise component resulting from dark current can be effectively eliminated irrespective of the temperature of the solid-state image sensor.

FIG.1

EP 1 986 424 A1

**Description**

**Technical Field**

The present invention relates to a fixed-pattern noise elimination apparatus for eliminating a fixed-pattern noise component resulting from dark current out of an image signal outputted from a solid-state image sensor, and to a solid-state image sensing apparatus and an electronic appliance provided with such a fixed-pattern noise elimination apparatus. The present invention also relates to a fixed-pattern noise elimination program for making a computer function as a fixed-pattern noise elimination apparatus for eliminating a fixed-pattern noise component resulting from dark current out of an image signal outputted from a solid-state image sensor.

**Background Art**

Today image shooting apparatuses such as digital still cameras and movie cameras are wide-spread. Many such image shooting apparatuses incorporate a CCD (charge-coupled device) as a solid-state image sensor for sensing the shooting subject. Generally, a CCD can convert incident light into an image signal only in a rather narrow dynamic range. Consequently, the subject in an image shot with a CCD may end up with part of its highlight or shadow detail lost. Such loss of highlight or shadow detail degrades image quality, and should preferably be minimized.

One solution to this inconvenience is to use a logarithmic-conversion solid-state image sensor. A logarithmic-conversion solid-state image sensor produces an image signal by logarithmically converting the amount of incident light, and thus can convert incident light into an image signal in a comparatively wide dynamic range. Generally, a logarithmic-conversion solid-state image sensor achieves logarithmic conversion by exploiting the current response of MOS transistors in their weak inversion region.

The output of a logarithmic-conversion solid-state image sensor, however, contains fixed-pattern noise resulting from variations in the characteristics of the logarithmic conversion MOS transistor, the pixel signal reading circuit, the column reading circuit, etc. Thus, inconveniently, the quality of an image shot with a logarithmic-conversion solid-state image sensor is greatly degraded by fixed-pattern noise.

A solution to this inconvenience is proposed in Non-patent Document 1 listed below. This document formulates the output of a logarithmic-conversion solid-state image sensor, and classifies the causes of fixed-pattern noise into three types of variation associated with offset, gain, and dark current respectively; it also discloses methods for compensating for those three types of variation individually. According to the conventional fixed-pattern noise elimination method disclosed in this document, preparatory image sensing is previously performed in three different conditions in total, namely in two high-light conditions where photodiodes produce so large photocurrent that dark current can be ignored as well as in a light-shielded condition where photodiodes only produce dark current. Then based on the results obtained, the three types of variation, i.e. those associated with offset, gain, and dark current respectively, contained in the output of the logarithmic-conversion solid-state image sensor are compensated for individually.

According to Non-patent Document 1, in a logarithmic-conversion solid-state image sensor, the relationship between the photocurrent $x$ produced in the photodiode in each pixel and the resulting logarithmic response output $y$ is given by formula (101) below.

$$y = a + b\,\ln(c + x) \qquad\qquad (101)$$

In formula (101), $a$ represents the offset, $b$ represents the gain, and $c$ represents the dark current. In the logarithmic-conversion solid-state image sensor, these parameters, namely the offset $a$, the gain $b$, and the dark current $c$, vary individually from one pixel to another, and this produces fixed-pattern noise. According to the conventional fixed-pattern noise elimination method disclosed in Non-patent Document 1, those parameters, namely the offset $a$, the gain $b$, and the dark current $c$, are calculated for each pixel, and are substituted in formula (101) so as to be compensated for; in this way, the correct relationship between the photocurrent x and the logarithmic response output $y$ is determined.

Now the conventional fixed-pattern noise elimination method disclosed in Non-patent Document 1 will be described in detail with reference to Fig. 4. Fig. 4 is a block diagram showing the configuration of a conventional fixed-pattern noise elimination apparatus. According to the conventional fixed-pattern noise elimination method, prior to actual image sensing, calibration is performed that involves the following sequence of processing.

In the calibration, preparatory image sensing is previously performed in three different conditions, namely in two high-light conditions where photodiodes produce so large photocurrent that dark current can be ignored as well as in a light-shielded condition where photodiodes only produce dark current.

In the first condition, the image-sensing surface of a solid-state image sensor 2 is irradiated with uniform light at an illuminance of $L1$, which will be described later. In this condition, the outputs from the solid-state image sensor 2 over a plurality of frames are arithmetically averaged pixel-by-pixel to eliminate the random noise component, and the results are recorded to a frame memory 31.

In the second condition, the image-sensing surface of the solid-state image sensor 2 is irradiated with uniform light at an illuminance of $L2$, which will be described later. In this condition, the outputs from the solid-state image sensor 2 over a plurality of frames are arithmetically averaged pixel-by-pixel to eliminate the random noise component, and the results are recorded to a frame memory 32.

In the third condition, the image-sensing surface of the solid-state image sensor 2 is shielded from light. In this condition, the outputs from the solid-state image sensor 2 over a plurality of frames are arithmetically averaged pixel-by-pixel to eliminate the random noise component, and the results are recorded to a frame memory 33.

The illuminances $L1$ and $L2$ are each so set that when uniform light that provides that illuminance on the image-sensing surface of the solid-state image sensor 2 is incident thereon, the photocurrent produced in the photodiodes on the image-sensing surface of the solid-state image sensor 2 is sufficiently larger than the dark current of the photodiodes. Specifically, the illuminances $L1$ and $L2$ are so set that the photocurrent is at least 100 times as large as the dark current. Moreover, the uniform light is so adjusted that the illuminance $L1$ is at least 10 times as high as the illuminance $L2$.

Next, based on the image signals recorded in the frame memories 31 to 33, a parameter calculator 34 calculates, pixel-by-pixel, the offset $a$, the gain $b$, and the dark current $c$ in formula (101) by the following procedure. First, based on the image signal $y_1$ recorded in the frame memory 31 and the image signal $y_2$ recorded in the frame memory 32, the gain $b$ is calculated pixel-by-pixel according to formula (102). In formula (102), $x_1$ represents the photocurrent produced when the image-sensing surface of the solid-state image sensor 2 is irradiated with uniform light at the illuminance $L1$, and depends on the value of the illuminance $L1$; $x_2$ represents the photocurrent produced when the image-sensing surface of the solid-state image sensor 2 is irradiated with uniform light at the brightness $L2$, and depends on the value of the illuminance $L2$. The values of the photocurrents $x_1$ and $x_2$ can be determined from the straight line, previously determined through measurements or the like and varying from one image sensor to another, that indicates the relationship between the illuminance and the photocurrent. Previously calculated photocurrent values corresponding to the illuminances $L1$ and $L2$ may be previously stored in the parameter calculator 34; or the solid-state image sensor 2 may be provided with a detector that detects the photocurrent produced in the photodiodes or the illuminance at which they are irradiated with light so that, based on the detection results from the detector, the parameter calculator 34 calculates the corresponding photocurrent values. Where this is difficult, instead of the photocurrents $x_1$ and $x_2$, the value of the illuminances $L1$ and $L2$ may instead be used directly. In that case, what is given by formula (101) is not the relationship between the photocurrent $x$ and the logarithmic response output $y$ but the relationship between the illuminance $L$, as the substitute for the photocurrent $x$, and the logarithmic response output $y$.

$$b = \frac{y_1 - y_2}{\ln\left(x_1 / x_2\right)} \qquad (102)$$

Next, based on the image signal $y_1$ recorded in the frame memory 31, the offset $a$ is calculated pixel-by-pixel according to formula (103). In a case where the gain $b$ is calculated by use of the illuminance instead of the photocurrent, the photocurrent $x1$ in formula (103) needs to be replaced with the illuminance $L1$.

$$a = y_1 - b \ln\left(x_1\right) \qquad (103)$$

Lastly, based on the image signal $y_d$ recorded in the frame memory 33, the dark current $c$ is calculated pixel-by-pixel according to formula (104). In a case where the gain $b$ is calculated by use of the illuminance instead of the photocurrent, $c$ in formula (104) represents not the dark current itself but the critical illuminance that depends on the value of the dark current. In other words, the value of the photocurrent produced in the photodiode in a pixel when it is irradiated with light at the critical illuminance is equal to the value of the dark current in that pixel. For further calculation, in a case where the illuminance is used instead of the photocurrent, $c$ can be dealt with as the critical illuminance.

$$c = \exp\left(\frac{y_d - a}{b}\right) \qquad (104)$$

The offset *a,* the gain *b*, and the dark current *c* calculated by the procedure described above are recorded to frame memories 61, 62, and 63 respectively.

Through the calibration described above, prior to actual image sensing, preparatory image sensing is previously performed in three different conditions, namely in two high-light conditions where photodiodes produce so large photocurrent that dark current can be ignored as well as in a light-shielded condition where photodiodes only produce dark current; then, based on the results of this preparatory image sensing, the offset *a,* the gain *b*, and the dark current *c* are calculated pixel-by-pixel, and are recorded to the frame memories 61, 62, and 63 respectively.

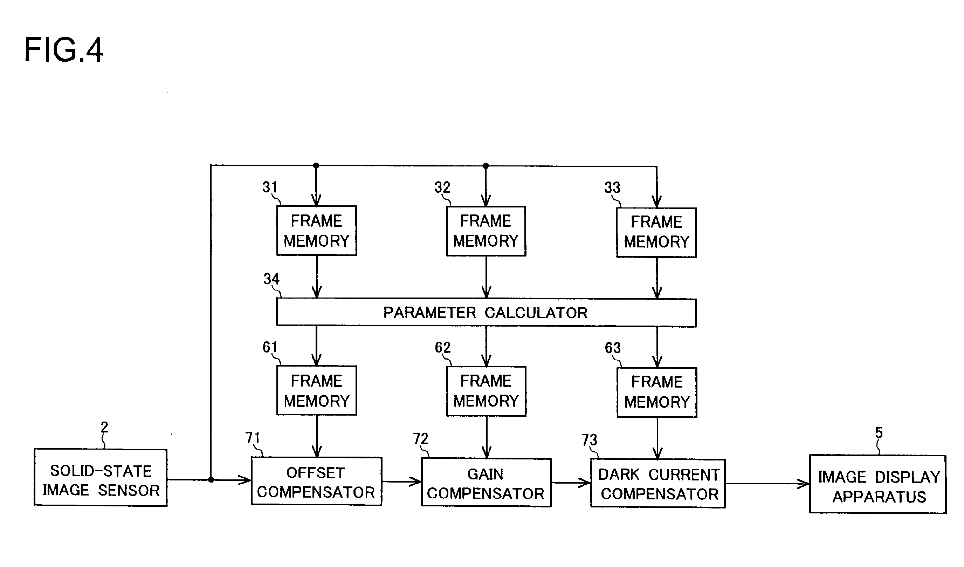

In actual image sensing, the image signal is compensated by use of the offset *a,* the gain *b*, and the dark current *c* recorded pixel-by-pixel in the frame memories 61, 62, and 63. Now, the procedure by which the image signal is compensated during actual image sensing will be described with reference to Fig. 4. An offset compensator 71 subtracts, pixel-by-pixel, the offset *a* recorded in the frame memory 61 from the output *y*, given by formula (101), of the solid-state image sensor 2. As a result, an image signal $Y_1$ is obtained that is unrelated to the offset *a* (see formula (105)).

$$Y_1 = y - a = b\ln(c + x) \qquad (105)$$

A gain compensator 72 divides, pixel-by-pixel, the output $Y_1$ from the offset compensator 71 by the gain *b* recorded in the frame memory 62. As a result, an image signal $Y_2$ is obtained that is unrelated to the gain *b* (see formula (106)).

$$Y_2 = Y_1 / b = \ln(c + x) \qquad (106)$$

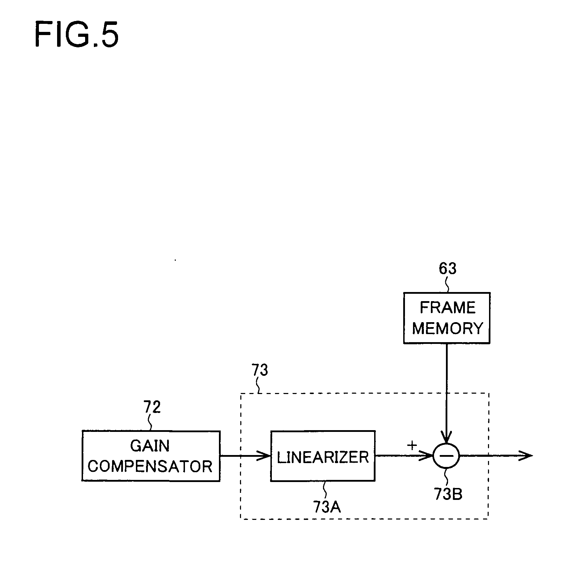

A dark current compensator 73 subtracts, pixel-by-pixel, the dark current *c* recorded in the frame memory 63 from an exponentially converted signal of the output $Y_2$ from the gain compensator 72. Here, the dark current compensator 73 is configured as shown in Fig. 5. In Fig. 5, the reference numeral 73A represents a linearizer, and the reference numeral 73B represents a subtracter. The linearizer 73A linearizes, pixel-by-pixel, the output $Y_2$ from the gain compen-sator 72 by use of an exponential function, so as to output an exponentially converted signal of the output $Y_2$ from the gain compensator 72. The subtracter 73B subtracts, pixel-by-pixel, the dark current *c* recorded in the frame memory 63 from the output from the linearizer 73A. As a result, an image signal $Y_3$ is obtained that is unrelated to the dark current *c* (see formula (107)).

$$Y_3 = \exp(Y_2) - c = x \qquad (107)$$

[Non-patent Publication 1] Bhaskar Choubey, Satoshi Aoyama, Dileepan Joseph, Stephen Otim and Steve Collins, "An Electronic Calibration Scheme for Logarithmic CMOS Pixels," Proceedings of the IEEE International Symposium on Circuits and Systems, vol. IV, pp. 856-9, May 2004

### Disclosure of the Invention

### Problems to be Solved by the Invention

Inconveniently, the dark current that appears in the photodiodes of the solid-state image sensor 2 increases exponentially as temperature rises. Thus, if the temperature of the solid-state image sensor 2 during the calibration differs from the temperature of the solid-state image sensor 2 during the actual image sensing due to heat generated within the solid-state image sensor itself or heat coming from outside it, the dark current *c* recorded in the frame memory 63 is no longer equal to the dark current that appears in the photodiodes during the actual image sensing. Accordingly, a fixed-pattern noise component resulting from dark current cannot be effectively eliminated by the fixed-pattern noise elimination method disclosed in Non-Patent Document 1. In particular, in a low-light condition, if the temperature of the solid-state image sensor 2 during the calibration greatly differs from the temperature of the solid-state image sensor 2 during the actual image sensing, fixed-pattern noise resulting from dark current conspicuously appears in the sensed image, greatly degrading the quality thereof.

In view of the conventionally encountered inconveniences mentioned above, it is an object of the present invention to provide a fixed-pattern noise elimination apparatus that can effectively eliminate a fixed-pattern noise component resulting from dark current irrespective of the temperature of a solid-state image sensor, and to provide a solid-state image sensing apparatus and an electronic appliance provided with such a fixed-pattern noise elimination apparatus. In view of the conventionally encountered inconveniences mentioned above, it is another object of the present invention to provide a fixed-pattern noise elimination program for making a computer function as a fixed-pattern noise elimination apparatus that can effectively eliminate a fixed-pattern noise component resulting from dark current irrespective of the temperature of a solid-state image sensor.

**Means for Solving the Problem**

To achieve the above objects, according to one aspect of the invention, a fixed-pattern noise elimination apparatus for eliminating a fixed-pattern noise component resulting from dark current out of an image signal outputted from a solid-state image sensor eliminates a fixed-pattern noise component resulting from dark current out of an image signal outputted from an effective pixel of the solid-state image sensor during image sensing, by using: a first dark current, which is dark current in a photoelectric element of a light-shielded pixel of the solid-state image sensor, as calculated based on a previously acquired signal outputted from the light-shielded pixel of the solid-state image sensor; a second dark current, which is dark current in a photoelectric element of the effective pixel of the solid-state image sensor, as calculated based on a previously acquired signal outputted from the effective pixel of the solid-state image sensor with no incident light, and a third dark current, which is dark current in the photoelectric element of the light-shielded pixel of the solid-state image sensor, as calculated based on a signal outputted from the light-shielded pixel of the solid-state image sensor during image sensing. In this way, even when the temperature of the solid-state image sensor at the time that a signal outputted therefrom was previously acquired differs from the temperature of the solid-state image sensor during actual image sensing, by use of the first, second, and third dark currents, it is possible to predict the dark current that is produced in the photoelectric element of the effective pixel of the solid-state image sensor during actual image sensing. Thus, it is possible to eliminate a fixed-pattern noise component resulting from dark current effectively irrespective of the temperature of the solid-state image sensor.

The solid-state image sensor may be a logarithmic-conversion solid-state image sensor that logarithmically converts the amount of incident light. In that case, more remarkable results can be obtained from the invention.

The fixed-pattern noise elimination apparatus having any of the configurations described above may be provided with a memory that stores the first and second dark currents each in linear form, or a memory that stores the first and second dark currents each in logarithmic form.

In the former case, the third dark current may be in linear form, and the fixed-pattern noise elimination apparatus may calculate a temperature coefficient based on the ratio of the first dark current to the third dark current and then subtract the arithmetic product of the second dark current and the temperature coefficient from a signal obtained by linearly processing a signal based on the signal outputted from the effective pixel of the solid-state image sensor during image sensing. Furthermore, there may be provided a first period during which the temperature coefficient is calculated and a second period during which the arithmetic product of the second dark current and the temperature coefficient is subtracted from the signal obtained by linearly processing the signal based on the signal outputted from the effective pixel of the solid-state image sensor during image sensing, and the fixed-pattern noise elimination apparatus may repeat the first and second periods alternately.

In the latter case, the third dark current may be in logarithmic form, and the fixed-pattern noise elimination apparatus may calculate a temperature coefficient based on the difference between the first dark current and the third dark current and then subtract a signal obtained by linearizing the sum of the second dark current and the temperature coefficient from a signal obtained by linearly processing a signal based on the signal outputted from the effective pixel of the solid-state image sensor during image sensing. Furthermore, there may be provided a first period during which the temperature coefficient is calculated and a second period during which the signal obtained by linearizing the sum of the second dark current and the temperature coefficient is subtracted from the signal obtained by linearly processing the signal based on the signal outputted from the effective pixel of the solid-state image sensor during image sensing, and the fixed-pattern noise elimination apparatus may repeat the first and second periods alternately.

In the fixed-pattern noise elimination apparatus having any of the configurations described above, the light-shielded pixel may be arranged in a pixel array. In that case, the signal outputted from the light-shielded pixel can be used sequentially by scanning, as with the signal outputted from effective pixel. In the fixed-pattern noise elimination apparatus having any of the configurations described above, the light-shielded pixel may be arranged outside a pixel array. In that case, the signal outputted from light-shielded pixel can be used independently, without scanning. Moreover, the light-shielded pixel may be sized larger than a pixel arranged inside a pixel array. This increases the dark current in the photodiode within the pixel, and thus reduces the effect of dark current shot noise, advantageously raising the accuracy with which the temperature coefficient is calculated based on the signal outputted from the light-shielded pixel. Alternatively, the light-shielded pixel may be sized smaller than a pixel arranged inside a pixel array. This advantageously reduces the area occupied the light-shielded pixel on the chip.

In the fixed-pattern noise elimination apparatus having any of the configurations described above, a dark current in a photoelectric element may be replaced with a critical illuminance that depends on the value of the dark current in the photoelectric current, a first dark current may be replaced with a first critical illuminance, a second dark current may be replaced with a second critical illuminance, and a third dark current may be replaced with a third critical illuminance. To achieve the above objects, according to another aspect of the invention, a solid-state image sensing apparatus is provided with: a solid-state image sensor; and the fixed-pattern noise elimination apparatus having any of the configurations described above that eliminates a fixed-pattern noise component resulting from dark current out of an image signal outputted from the solid-state image sensor. To achieve the above objects, according to another aspect of the invention, an electronic appliance is provided with such a solid-state image sensing apparatus. To achieve the above objects, according to another aspect of the invention, a fixed-pattern noise elimination program makes a computer function as the fixed-pattern noise elimination apparatus having any of the configurations described above. By use of this program, it is possible to realize a fixed-pattern noise elimination program according to the invention without relying on a dedicated apparatus.

**Advantages of the Invention**

According to the invention, it is possible to eliminate a fixed-pattern noise component resulting from dark current effectively irrespective of the temperature of the solid-state image sensor.

**Brief Description of Drawings**

[Fig. 1] is a block diagram showing an example of the configuration of a solid-state image sensing apparatus according to the invention.

[Fig. 2] is a block diagram showing an example of the configuration of a dark current compensator provided in a fixed-pattern noise elimination apparatus shown in Fig. 1, in a first embodiment of the invention.

[Fig. 3] is a block diagram showing an example of the configuration of a dark current compensator provided in a fixed-pattern noise elimination apparatus shown in Fig. 1, in a second embodiment of the invention.

[Fig. 4] is a block diagram showing the configuration of a conventional fixed-pattern noise elimination apparatus.

[fig. 5] is a block diagram showing the configuration of a dark current compensator provided in the fixed-pattern noise elimination apparatus shown in Fig. 4.

[Fig. 6A] is a diagram showing a pixel arrangement in a solid-state image sensor.

[Fig. 6B] is a diagram showing a pixel arrangement in a solid-state image sensor.

[Fig. 6C] is a diagram showing a pixel arrangement in a solid-state image sensor.

[Fig. 6D] is a diagram showing a pixel arrangement in a solid-state image sensor.

**List of Reference Symbols**

| | |
|---|---|
| 1 | Solid-state image sensing apparatus |
| 2 | Solid-state image sensor |
| 3 | Compensation data calculator |
| 4 | Fixed-pattern noise elimination apparatus |
| 5 | Image display apparatus |
| 6 | Compensation data memory |
| 31-33 | Frame memories |
| 34 | Parameter calculator |
| 61-63 | Frame memories |
| 71 | Offset compensator |
| 72 | Gain compensator |
| 73 | Dark current compensator |
| 73A | Linearizer |
| 73B | Subtracter |
| 73C, 73D | Switches |
| 73E | Divider |

| 73F | Temperature coefficient memory |
|---|---|
| 73G, 73H | Switches |
| 73I | Multiplier |
| 73J | Subtracter |
| 73K | Adder |

**Best Mode for Carrying Out the Invention**

(First Embodiment)

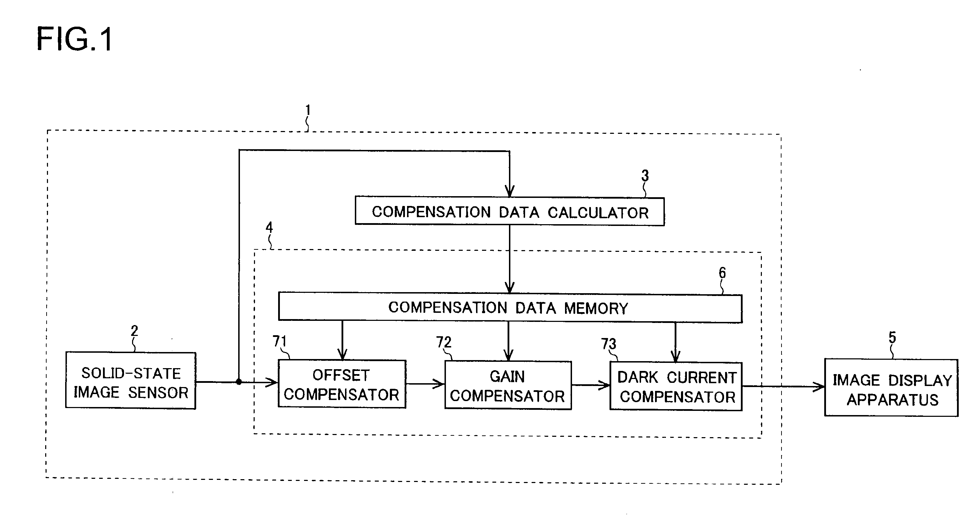

A first embodiment of the invention will be described below with reference to Fig. 1. Fig. 1 is a block diagram showing an example of the configuration of a solid-state image sensing apparatus according to the invention. The solid-state image sensing apparatus 1 shown in Fig. 1 is provided with a solid-state image sensor 2, a compensation calculator 3, and a fixed-pattern noise elimination apparatus 4. The fixed-pattern noise elimination apparatus 4 is provided with a compensation data memory 6, an offset compensator 71, a gain compensator 72, and a dark current compensator 73. The output of the solid-state image sensing apparatus 1 has fixed-pattern noise eliminated therefrom by the fixed-pattern noise elimination apparatus 4, and is then reproduced into an image on an image display apparatus 5.

The solid-state image sensor 2 is a logarithmic-conversion solid-state image sensor, and senses the image of a subject. Specifically, as the light emanating or reflected from the subject is incident through an optical system, such as a lens, on the solid-state image sensor surface, the solid-state image sensor 2 converts the amounts of incident light logarithmically into brightness levels. This enables the solid-state image sensor 2 to produce and output an image signal representing the image of the subject. On the image-sensing surface of the solid-state image sensor 2, pixels having photodiodes are arranged in a two-dimensional array.

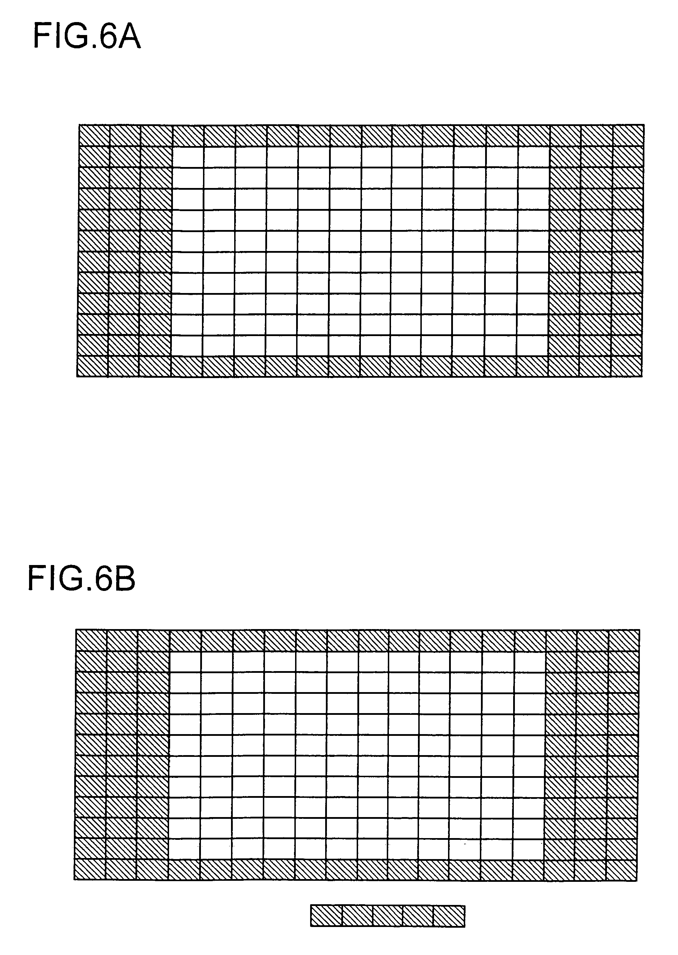

The pixels of the solid-state image sensor 2 divide into light-shielded pixels and effective pixels. The difference between the light-shielded and effective pixels lies in whether or not their respective photodiodes have an upper part thereof covered with a metal conductor or the like; in other respects, the two types of pixels usually have the same structure. Accordingly, the pixels of the solid-state image sensor 2 are usually arranged in an array as shown in Fig. 6A. The image signals from the light-shielded pixels arranged in the pixel array shown in Fig. 6A can be used sequentially by scanning, as with the image signals from the effective pixels. In Figs. 6A to 6D, effective pixels are indicated by rectangulars without hatching, and light-shielded pixels are indicated by hatched rectangulars.

In a solid-state image sensing apparatus according to the invention, the image signals from not only effective pixels but also light-shielded pixels are used, as will be described later, but it is not always necessary to use the image signals from all the light-shielded pixels. For example, it is possible to select a plurality of light-shielded pixels that, as a result of being surrounded by other light-shielded pixels, are not much affected by incident light and use only the image signals from those selected light-shielded pixels.

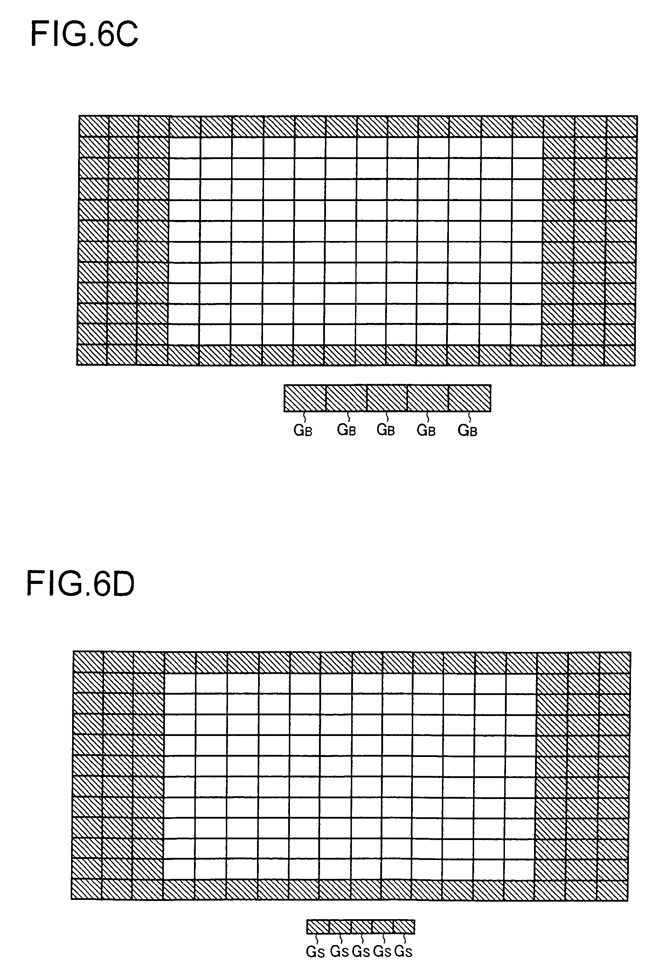

As shown in Fig. 6B, light-shielded pixels may be arranged outside the pixel array. Advantageously, arranging light-shielded pixels outside the pixel array makes it possible to use the image signals therefrom independently, without scanning. As shown in Figs. 6C and 6D, the light-shielded pixels arranged outside the pixel array may be sized differently from the pixels inside the pixel array. Sizing the light-shielded pixels $G_B$ arranged outside the pixel array larger than the pixels inside the pixel array as shown in Fig. 6C increases the dark current in the photodiodes within the pixels, and thus reduces the effect of dark current shot noise, advantageously raising the accuracy with which the temperature coefficient is calculated based on the image signals of the light-shielded pixels GB. Sizing the light-shielded pixels Gs arranged outside the pixel array smaller than the pixels inside the pixel array as shown in Fig. 6D advantageously reduces the area occupied by the light-shielded pixels on the chip.

The solid-state image sensor 2 performs image sensing by using mainly the effective pixels that produce image signals according to incident light as described above. In a solid-state image sensing apparatus according to the invention, the image signals from not only effective pixels but also light-shielded pixels are used. In the following description, it is to be assumed that what are referred to simply as image signals include both the image signals from effective pixels and the image signals from light-shielded pixels.

In the solid-state image sensor 2, which is a logarithmic-conversion solid-state image sensor, the relationship between the photocurrent $x$ produced in the photodiode of each pixel and the resulting response output $y$ is given by formula (1) below, where $a$ represents the offset, $b$ represents the gain, and $c$ represents the dark current.

$$y = a + b \ln(c + x) \qquad (1)$$

From an image signal from the solid-state image sensor 2, the compensation calculator 3 calculates, as compensation data, the offset *a,* the gain *b*, and the dark current *c* individually. How the compensation calculator 3 operates will be described in detail later.

The compensation data memory 6 stores the offset *a,* the gain *b*, and the dark current *c* calculated by the compensation calculator 3. How this is achieved will be described later.

By using the offset compensation data read out from the compensation data memory 6, the offset compensator 71 eliminates from the output of the solid-state image sensor 2 the fixed-pattern noise component resulting from a variation in the offset. By using the gain compensation data read out from the compensation data memory 6, the gain compensator 72 eliminates from the output of the offset compensator 71 the fixed-pattern noise component resulting from a variation in the gain. By using the dark current compensation data read out from the compensation data memory 6, the dark current compensator 73 eliminates from the output of the gain compensator 72 the fixed-pattern noise component resulting from a variation in the dark current. How these different fixed-pattern noise components are eliminated will be described in detail later.

Prior to actual image sensing, the solid-state image sensing apparatus 1 shown in Fig. 1 performs calibration that involves a sequence of processing described later. The calibration is performed by the compensation calculator 3, and the results are recorded to the compensation data memory 6. The calibration needs to be performed once as part of inspection at shipment after the fabrication of the solid-state image sensor 2 and the fixed-pattern noise elimination apparatus 4. For this reason, the compensation calculator 3 may be realized with a general-purpose workstation, a personal computer, a tester for shipment inspection, or the like so that it can be externally fitted to the solid-state image sensing apparatus 1, that is, so that it is excluded from the integral components of the solid-state image sensing apparatus 1. Alternatively, the compensation calculator 3 may be realized with a semiconductor memory or LSI so that it can be incorporated in the fixed-pattern noise elimination apparatus 4, that is, so that it is included among the integral components of the fixed-pattern noise elimination apparatus 4.

In the calibration, preparatory image sensing is previously performed in three different conditions, namely in two high-light conditions where photodiodes produce so large photocurrent that dark current can be ignored as well as in a light-shielded condition where photodiodes only produce dark current.

In the first condition, the image-sensing surface of the solid-state image sensor 2 is irradiated with uniform light at an illuminance of $L1$, which will be described later. In this condition, the outputs from the solid-state image sensor 2 over a plurality of frames are arithmetically averaged pixel-by-pixel to eliminate the random noise component, and the results are recorded to a memory device in the compensation calculator 3.

In the second condition, the image-sensing surface of the solid-state image sensor 2 is irradiated with uniform light at an illuminance of $L2$, which will be described later. In this condition, the outputs from the solid-state image sensor 2 over a plurality of frames are arithmetically averaged pixel-by-pixel to eliminate the random noise component, and the results are recorded to a memory device in the compensation calculator 3.

In the third condition, the image-sensing surface of the solid-state image sensor 2 is shielded from light. In this condition, the outputs from the solid-state image sensor 2 over a plurality of frames are arithmetically averaged pixel-by-pixel to eliminate the random noise component, and the results are recorded to a memory device in the compensation calculator 3.

Here, it is assumed that the temperature of the solid-state image sensor 2 during the calibration is $T_{cal}$, remaining constant throughout image sensing and being uniform within the sensor. Moreover, the illuminances $L1$ and $L2$ are each so set that when uniform light that provides that illuminance on the image-sensing surface of the solid-state image sensor 2 is incident thereon, the photocurrent produced in the photodiodes on the image-sensing surface of the solid-state image sensor 2 is sufficiently larger than the dark current of the photodiodes. Specifically, the illuminances $L1$ and $L2$ are so set that the photocurrent is at least 100 times as large as the dark current. Moreover, the uniform light is so adjusted that the illuminance $L1$ is at least 10 times as high as the illuminance $L2$.

Next, based on the image sensing results obtained in the different conditions described above and recorded in the memory devices in the compensation calculator 3, the compensation calculator 3 calculates, pixel-by-pixel, the offset *a,* the gain *b*, and the dark current *c* in formula (1) by the following procedure. First, based on the image sensing result $y_1$ obtained in the first condition and the image sensing result $y_2$ obtained in the second condition, the gain *b* is calculated pixel-by-pixel according to formula (2). In formula (2), $x_1$ represents the photocurrent produced when the image-sensing surface of the solid-state image sensor 2 is irradiated with uniform light at the illuminance $L1$, and depends on the value of the illuminance $L1$; $x_2$ represents the photocurrent produced when the image-sensing surface of the solid-state image sensor 2 is irradiated with uniform light at the brightness $L2$, and depends on the value of the illuminance $L2$. The values of the photocurrents $x_1$ and $x_2$ in light-shielded pixels are assumed to be zero. The values of the photocurrents $x_1$ and $x_2$ in effective pixels can be determined from the straight line, previously determined through measurements or the like and varying from one image sensor to another, that indicates the relationship between the illuminance and the photocurrent. Previously calculated photocurrent values corresponding to the illuminances $L1$ and $L2$ may be previously stored in the compensation calculator 3; or the solid-state image sensor 2 may be provided with a detector that detects the photocurrent produced in the photodiodes or the illuminance at which they are irradiated with light so that, based on the detection results from the detector, the parameter calculator 34 calculates the corresponding photocurrent values. Where this is difficult, instead of the photocurrents $x_1$ and $x_2$, the value of the illuminances $L1$ and $L2$ may instead be used directly. In that case, what is given by formula (1) is not the relationship between the photocurrent $x$ and the logarithmic response output $y$ but the relationship between the illuminance $L$, as the substitute for the photocurrent $x$, and the logarithmic response output $y$.

$$b = \frac{y_1 - y_2}{\ln(x_1 / x_2)} \qquad (2)$$

Next, based on the image sensing result $y_1$ obtained in the first condition, the offset $a$ is calculated pixel-by-pixel according to formula (3). In a case where the gain $b$ is calculated by use of the illuminance instead of the photocurrent, the photocurrent $x1$ in formula (3) needs to be replaced with the illuminance $L1$.

$$a = y_1 - b \ln(x_1) \qquad (3)$$

Lastly, based on the image sensing result $y_d$ obtained in the third condition, the dark current $c(T_{cal})$, which depends on the temperature $T_{cal}$ of the solid-state image sensor 2 during image sensing in the calibration, is calculated pixel-by-pixel according to formula (4). In a case where the gain $b$ is calculated by use of the illuminance instead of the photocurrent, $c(T_{cal})$ in formula (4) represents not the dark current itself but the critical illuminance that depends on the value of the dark current at the temperature $T_{cal}$. In other words, the value of the photocurrent produced in the photodiode in each pixel at the temperature $T_{cal}$ when it is irradiated with light at the critical illuminance is equal to the value of the dark current in that pixel. For further calculation, in a case where the illuminance is used instead of the photocurrent, $c(T_{cal})$ can be dealt with as the critical illuminance at the temperature $T_{cal}$.

$$c(T_{cal}) = \exp\left(\frac{y_d - a}{b}\right) \qquad (4)$$

The offset $a$, the gain $b$, and the dark current $c(T_{cal})$ calculated by the procedure described above are recorded individually to the compensation data memory 6.

Through the calibration described above, prior to actual image sensing, preparatory image sensing is previously performed in three different conditions, namely in two high-light conditions where photodiodes produce so large photocurrent that dark current can be ignored as well as in a light-shielded condition where photodiodes only produce dark current; then, based on the results of this preparatory image sensing, the offset $a$, the gain $b$, and the dark current $c(T_{cal})$ are calculated pixel-by-pixel, and are recorded individually to the compensation data memory 6.

In actual image sensing, the image signal is compensated by use of the offset $a$, the gain $b$, and the dark current $c(T_{cal})$ recorded pixel-by-pixel in the compensation data memory 6. Now, with reference to Fig. 1, the procedure by which the image signal is compensated during actual image sensing will be described.

When the temperature dependence of dark current is taken into consideration, in the solid-state image sensor 2, which is a logarithmic-conversion solid-state image sensor, the relationship between the photocurrent $x$ produced in the photodiode of each pixel and the resulting logarithmic response output $\psi$ during actual image sensing is given by formula (5) below.

$$\psi = a + b \ln\left[c(T_{act}) + x\right] \qquad (5)$$

In formula (5), $a$ represents the offset, $b$ represents the gain, and $c(T_{act})$ represents the dark current in the solid-state image sensor 2 at the temperature $T_{act}$ during actual image sensing. In a logarithmic-conversion solid-state image sensor, these parameters, namely the offset $a$, the gain $b$, and the dark current $c(T_{act})$, vary individually from one pixel to another, and this produces fixed-pattern noise.

The offset compensator 71 subtracts, pixel-by-pixel, the offset $a$ recorded in compensation data memory 6 from the output $\psi$ of the solid-state image sensor 2 during actual image sensing. As a result, an image signal $\Psi_1$ is

obtained that is unrelated to the offset *a* (see formula (6)).

$$\Psi_1 = \psi - a = b \ln\big[c(T_{act}) + x\big] \tag{6}$$

The gain compensator 72 divides, pixel-by-pixel, the output $\Psi_1$ from the offset compensator 71 by the gain *b* recorded in the compensation data memory 6. As a result, an image signal $\Psi_2$ is obtained that is unrelated to the gain *b* (see formula (7)).

$$\Psi_2 = \Psi_1 / b = \ln\big[c(T_{act}) + x\big] \tag{7}$$

Of such image signals $\Psi_2$ thus compensated for the variations in the offset and the gain, let an image signal from an effective pixel be $\Psi_{os}$, and let an image signal from a light-shielded pixel be $\Psi_{ob}$. Then, these image signals are given by formulae (8) and (9) respectively.

$$\Psi_{os} = \ln\big[c_{os}(T_{act}) + x_{os}\big] \tag{8}$$

$$\Psi_{ob} = \ln\big[c_{ob}(T_{act})\big] \tag{9}$$

In formula (8), $c_{os}(T_{act})$ represents the dark current in an effective pixel of the solid-state image sensor 2 at the temperature $T_{act}$ during actual image sensing, and $x_{os}$ represents the photocurrent in the effective pixel of the solid-state image sensor 2 during actual image sensing. In formula (9), $c_{ob}(T_{act})$ represents the dark current in a light-shielded pixel of the solid-state image sensor 2 at the temperature $T_{act}$ during actual image sensing.

The solid-state image sensor 2 outputs an image signal $\Psi_{os}$ from an effective pixel and an image signal $\Psi_{ob}$ from a light-shielded pixel in time sequence. The offset compensator 71 and the gain compensator 72 perform pipeline processing on the image signals from the effective and light-shielded pixels thus outputted in time sequence. Accordingly, the gain compensator 72 outputs the image signal $\Psi_{os}$ from the effective pixel and the image signal $\Psi_{ob}$ from the light-shielded pixel in time sequence. The operation of the dark current compensator 73 divides into an operation it performs during a first period and an operation it performs during a second period; specifically, during the first period, the dark current compensator 73 calculates a temperature coefficient while the gain compensator 72 is outputting the image signal $\Psi_{ob}$ from the light-shielded pixel and, during the second period, the dark current compensator 73 compensates for the dark current by using the temperature coefficient calculated during the first period while the gain compensator 72 is outputting the image signal $\Psi_{os}$ from the effective pixel.

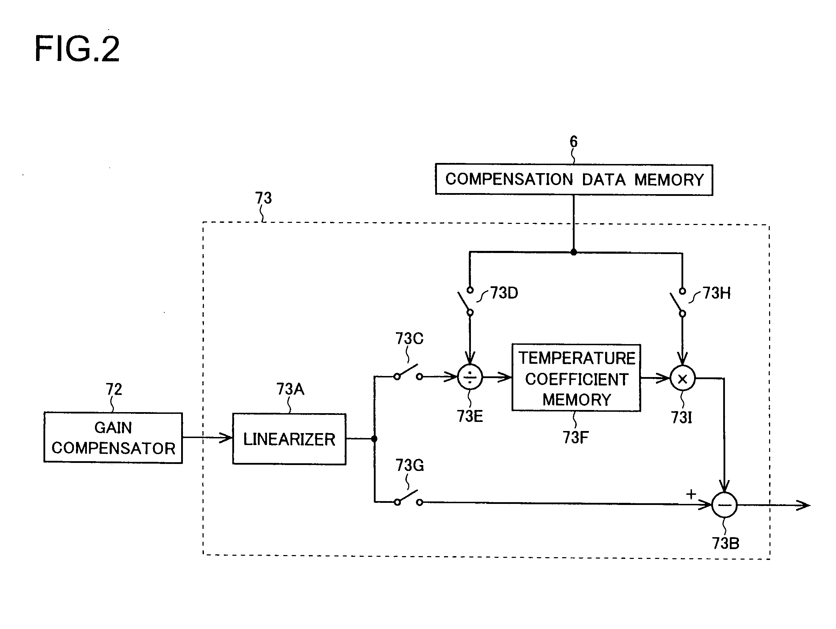

Fig. 2 shows an example of the configuration of the dark current compensator 73. The dark current compensator 73 shown in Fig. 2 includes a linearizer 73A, a subtracter 73B, switches 73C, 73D, 73G, 73H, a divider 73E, a temperature coefficient memory 73F, and a multiplier 73I.

First, a description will be given of the operation of the dark current compensator 73 during the first period. While the gain compensator 72 is outputting the image signal $\Psi_{ob}$ from the light-shielded pixel, within the dark current compensator 73, the switches 73C and 73D remains closed, and the switches 73G and 73H remain open. The linearizer 73A linearizes the image signal $\Psi_{ob}$ from the light-shielded pixel by use of an exponential function. As a result, the linearizer 73A outputs the dark current $c_{ob}(T_{act})$ of the light-shielded pixel.

The divider 73E calculates the ratio of the dark current $c_{ob}(T_{act})$ of the light-shielded pixel as outputted from the linearizer 73A to the dark current $c_{ob}(T_{cal})$ of the light-shielded pixel as recorded in the compensation data memory 6, and outputs the result as a temperature coefficient $\kappa$ (see formula (10)). In a case where a plurality of light-shielded pixels are used for fixed-pattern noise elimination, a plurality of temperature coefficients $\kappa$ are calculated, which are then, for example, arithmetically averaged.

$$\kappa = \frac{c_{ob}(T_{act})}{c_{ob}(T_{cal})} \tag{10}$$

Generally, the dark current $c$ at an absolute temperature $T$ is given by formula (11). Thus, the temperature coefficient $\kappa$ given by formula (10) is, by use of $\varepsilon$ given by formula (12), given by formula (13). Here, $q$ represents the electric charge of a single electron, $N$ represents the activation energy, and $k$ represents Boltzmann's constant; $I_0$ represents the dark current coefficient specific to each pixel.

$$c = I_0 \exp(-\frac{qN}{kT}) \tag{11}$$

$$\varepsilon(T) = \exp(-\frac{qN}{kT}) \tag{12}$$

$$\kappa = \frac{\varepsilon(T_{act})}{\varepsilon(T_{cal})} \tag{13}$$

The temperature coefficient memory 73F stores the temperature coefficient $\kappa$ outputted from the divider 73E. During the first period, the temperature coefficient memory 73F does not output the temperature coefficient $\kappa$ to the multiplier 73I; during the second period, the temperature coefficient memory 73F outputs the temperature coefficient $\kappa$ to the multiplier 73I.

Next, a description will be given of the operation of the dark current compensator 73 during the second period. While the gain compensator 72 is outputting the image signal $\Psi_{os}$ from the effective pixel, within the dark current compensator 73, the switches 73C and 73D remains open, and the switches 73G and 73H remain closed. The multiplier 73I calculates the arithmetic product of (multiplies together) the dark current $C_{os}(T_{cal})$ in the effective pixel at the temperature $T_{cal}$ as recorded in the compensation data memory 6 and the temperature coefficient $\kappa$ stored in the temperature coefficient memory 73F. The linearizer 73A linearizes the image signal $\Psi_{os}$ from the effective pixel by use of an exponential function. The subtracter 73B subtracts, for one effective pixel after another, the output of the multiplier 73I from the output of the linearizer 73A, and outputs $\Psi_3$ (see formula (14)).

$$\Psi_3 = \exp(\Psi_{os}) - \kappa\, c_{os}(T_{cal}) \tag{14}$$

When formulae (8) and (13) are substituted in formula (14), and moreover formulae (11) and (12) are also substituted therein, $\Psi_3$ is given by formula (15). Here, $I_{os}$ represents the dark current coefficient specific to each effective pixel.

$$\Psi_3 = I_{os}\varepsilon(T_{act}) + x_{os} - \frac{\varepsilon(T_{act})}{\varepsilon(T_{cal})} I_{os}\varepsilon(T_{cal}) = x_{os} \tag{15}$$

As formula (15) clearly shows, the dark current in the effective pixel at the temperature $T_{act}$ during actual image sensing, i.e. the first term of formula (15), is canceled by the arithmetic product of the temperature coefficient $\kappa$, appearing in the third term of formula (15) and given by formula (13), and the dark current $C_{os}(T_{cal})$ in the effective pixel at the temperature $T_{cal}$ during calibration. As a result, an image signal $\Psi_3$ unrelated to dark current is obtained.

The dark current compensator 73 repeats the first and second periods alternately at appropriate time intervals and thereby follows up time-related variations in dark current resulting from variations in the temperature of the solid-state image sensor 2. In this way, it is possible to eliminate a fixed-pattern noise component resulting from dark current efficiently irrespective of the temperature of the solid-state image sensor 2.

(Second Embodiment)

A second embodiment of the invention will be described below with reference to Fig. 1. The second embodiment differs from the first embodiment in part of the operation of the compensation calculator 3 and in the internal configuration and operation of the dark current compensator 73. Accordingly, the following description deals exclusively with the differences.

As in the first embodiment, in the second embodiment also, prior to actual image sensing, the solid-state image sensing apparatus 1 shown in Fig. 1 performs calibration that involves a sequence of processing described later. The calibration is performed by the compensation calculator 3, and the results are recorded to the compensation data memory 6.

In the calibration, the offset $a$, the gain b, and the logarithm of the dark current $c(T_{cal})$ are calculated by the same procedure as described previously in connection with the first embodiment, and are recorded individually to the compensation data memory 6. That is, a dark current $\ln[c(T_{cal})]$ in logarithmic form given by formula (16), instead of formula (4), is calculated by the compensation calculator 3, and the result is recorded to the compensation data memory 6.

$$\ln\left[c\left(T_{cal}\right)\right] = \frac{y_d - a}{b} \tag{16}$$

In actual image sensing, the image signal is compensated by use of the offset $a$, the gain $b$, and the dark current $\ln[c(T_{cal})]$ recorded pixel-by-pixel in the compensation data memory 6. Now, with reference to Fig. 1, the procedure by which the image signal is compensated during actual image sensing will be described. Since the offset compensator 71 and the gain compensator 72 operate here in the same manner as in the first embodiment, no description of their operation will be repeated.

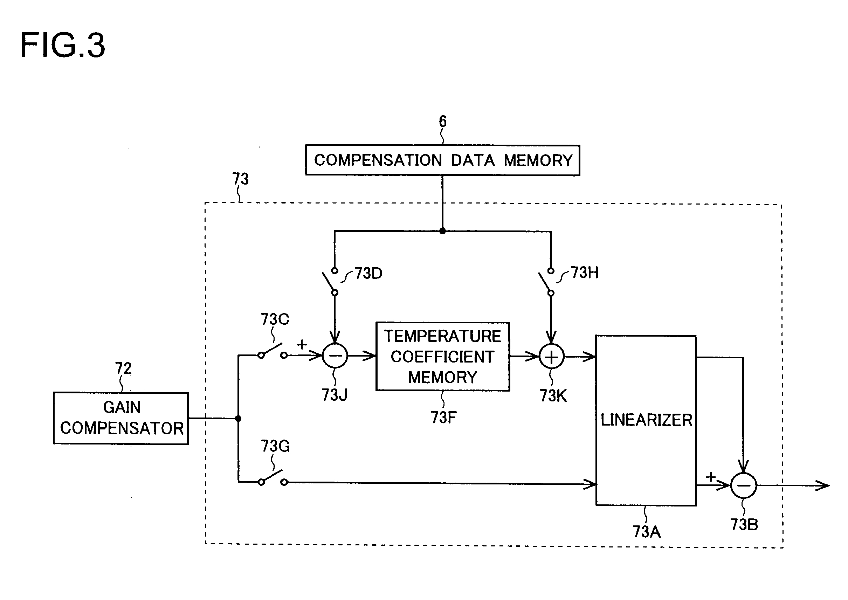

Fig. 3 shows an example of the configuration of the dark current compensator 73 in the second embodiment. The dark current compensator 73 shown in Fig. 3 includes a linearizer 73A, a subtracter 73B, switches 73C, 73D, 73G, and 73H, a subtracter 73J, a temperature coefficient memory 73F, and an adder 73K.

As in the fist embodiment, here also, the operation of the dark current compensator 73 divides into an operation it performs during a first period and an operation it performs during a second period; specifically, during the first period, the dark current compensator 73 calculates a temperature coefficient while the gain compensator 72 is outputting the image signal $\Psi_{ob}$ from the light-shielded pixel and, during the second period, the dark current compensator 73 compensates for the dark current by using the temperature coefficient calculated during the first period while the gain compensator 72 is outputting the image signal $\Psi_{os}$ from the effective pixel.

First, a description will be given of the operation of the dark current compensator 73 during the first period. While the gain compensator 72 is outputting the image signal $\Psi_{ob}$ from the light-shielded pixel, within the dark current compensator 73, the switches 73C and 73D remains closed, and the switches 73G and 73H remain open. The subtracter 73J calculates the difference between the dark current $\ln[c_{ob}(T_{act})]$ in logarithmic form as outputted from the gain compensator 72 and the dark current $\ln[c_{ob}(T_{cal})]$ in logarithmic form as recorded in the compensation data memory 6, and outputs the result as a temperature coefficient $\ln(\kappa)$ in logarithmic form (see Fig. 17).

$$\ln(\kappa) = \ln\left[c_{ob}\left(T_{act}\right)\right] - \ln\left[c_{ob}\left(T_{cal}\right)\right] = \ln\left[\frac{c_{ob}\left(T_{act}\right)}{c_{ob}\left(T_{cal}\right)}\right] \tag{17}$$

Generally, the dark current $c$ at an absolute temperature $T$ is given by formula (11). Thus, the temperature coefficient $\ln(\kappa)$ in logarithmic form given by formula (17) is, by use of $\varepsilon$ given by formula (12), given by formula (18).

$$\ln(\kappa) = \ln\left[\frac{\varepsilon(T_{act})}{\varepsilon(T_{cal})}\right] \qquad (18)$$

The temperature coefficient memory 73F stores the temperature coefficient $\ln(\kappa)$ in logarithmic form outputted from the subtracter 73J. During the first period, the temperature coefficient memory 73F does not output the temperature coefficient $\ln(\kappa)$ in logarithmic form to the adder 73K; during the second period, the temperature coefficient memory 73F outputs the temperature coefficient $\ln(\kappa)$ in logarithmic form to adder 73K.

Next, a description will be given of the operation of the dark current compensator 73 during the second period. While the gain compensator 72 is outputting the image signal $\Psi_{os}$ from the effective pixel, within the dark current compensator 73, the switches 73C and 73D remains open, and the switches 73G and 73H remain closed. The adder 73K calculates the sum of the dark current $\ln[c_{os}(T_{cal})]$ in the effective pixel in logarithmic form at the temperature $T_{cal}$ as recorded in the compensation data memory 6 and the temperature coefficient $\ln(\kappa)$ stored in the temperature coefficient memory 73F. The linearizer 73A linearizes the image signal $\Psi_{os}$ from the effective pixel and the output of the adder 73K each by use of an exponential function. The subtracter 73B subtracts, among the outputs of the linearizer 73A, the linearized output of the adder 73K from the linearized image signal $\Psi_{os}$ from the effective pixel, and outputs $\psi_3$ given by formula (14). Here, logarithmically converting both sides of formula (18) gives formula (13). Hence, when formulae (8) and (13) are substituted in formula (14), and moreover formulae (11) and (12) are also substituted therein, $\Psi_3$ is given by the same formula as in the first embodiment, namely formula (15).

As in the first embodiment, as formula (15) clearly shows, the dark current in the effective pixel at the temperature $T_{act}$ during actual image sensing, i.e. the first term of formula (15), is canceled by the arithmetic product of the temperature coefficient $\kappa$, appearing in the third term of formula (15) and given by formula (13), and the dark current $C_{os}(T_{cal})$ in the effective pixel at the temperature $T_{cal}$ during calibration. As a result, an image signal $\Psi_3$ unrelated to dark current is obtained.

In the solid-state image sensing apparatus 1 shown in Fig. 1, in a case where variations in the offset or the gain in the image signal outputted from the solid-state image sensor 2 are thought to be so small as to be practically ignorable, the offset compensator 71 or the gain compensator 72 or both may be, as necessary, omitted from the constituent blocks; even then, it is possible to eliminate fixed-pattern noise resulting from dark current sufficiently to make the sensed image smoother.

The blocks provided in the fixed-pattern noise elimination apparatus 4 described above are all functional blocks. Thus, by building the individual blocks of the fixed-pattern noise elimination apparatus 4 with dedicated circuits, it is possible to realize a fixed-pattern noise elimination apparatus according to the invention; also by running on a computer a fixed-pattern noise elimination program that makes it function as the fixed-pattern noise elimination apparatus 4 described above, it is as well possible to realize a fixed-pattern noise elimination apparatus according to the invention.

Such a fixed-pattern noise elimination program may be supplied to a computer on a computer-readable recording medium having the fixed-pattern noise elimination program stored thereon; it may be supplied to a computer over a communication network that permits data transfer across a wired or wireless communication path; or it may be previously stored in a memory inside a computer.

The invention may be practiced in any manner other than specifically described above by way of embodiments, and permits many modifications and variations within the scope of the appended claims. That is, the invention encompasses any embodiment realized by combining together the herein-disclosed technical features appropriately modified within the scope of the appended claims.

For example, although the embodiments described above deal with cases where the solid-state image sensor used is of a logarithmic conversion type, also in a solid-state image sensor of a type other than that (for example, a solid-state image sensor of a linear conversion type, and moreover not only of a MOS type but also of a CCD type), inconveniences ascribable to time-related variations in dark current resulting from variations in the temperature of the solid-state image sensor are experienced, albeit not so remarkably as in a logarithmic conversion type. Thus, the invention may also be applied to a fixed-pattern noise elimination apparatus that eliminates a fixed-pattern noise component resulting from dark current out of the output signal of a solid-state image sensor of other than a logarithmic conversion type.

Consider, for example, a case where the invention is applied to a fixed-pattern noise elimination apparatus that eliminates a fixed-pattern noise component resulting from dark current out of the output signal of a linear-conversion solid-state image sensor. Whereas with a logarithmic conversion solid-state image sensor the temperature coefficient for dark current compensation is calculated by subtraction as given by formula (17), with a linear conversion solid-state image sensor such subtraction is replaced with division. Moreover, whereas with a logarithmic conversion solid-state image sensor the second term of formula (14) is calculated by adding together the dark current in the effective pixel in logarithmic form and the temperature coefficient in logarithmic form, with a linear conversion solid-state image sensor such addition is replaced with multiplication of the dark current in the effective pixel in linear form by the temperature coefficient in linear form.

**Industrial Applicability**

A fixed-pattern noise eliminating apparatus according to the invention can be incorporated in a solid-state image sensing apparatus for the purpose of eliminating a fixed-pattern noise component resulting from dark current out of the image signal outputted from a solid-state image sensor; such a solid-state image sensing apparatus can be incorporated in various kinds of electronic appliance such as digital still cameras and movie cameras.

**Claims**

1. A fixed-pattern noise elimination apparatus for eliminating a fixed-pattern noise component resulting from dark current out of an image signal outputted from a solid-state image sensor,
   wherein the fixed-pattern noise elimination apparatus eliminates a fixed-pattern noise component resulting from dark current out of an image signal outputted from an effective pixel of the solid-state image sensor during image sensing, by using:

   a first dark current, which is dark current in a photoelectric element of a light-shielded pixel of the solid-state image sensor, as calculated based on a previously acquired signal outputted from the light-shielded pixel of the solid-state image sensor,
   a second dark current, which is dark current in a photoelectric element of the effective pixel of the solid-state image sensor, as calculated based on a previously acquired signal outputted from the effective pixel of the solid-state image sensor with no incident light, and
   a third dark current, which is dark current in the photoelectric element of the light-shielded pixel of the solid-state image sensor, as calculated based on a signal outputted from the light-shielded pixel of the solid-state image sensor during image sensing.

2. The fixed-pattern noise elimination apparatus according to claim 1,
   wherein the solid-state image sensor is a logarithmic conversion solid-state image sensor that logarithmically converts the amount of incident light.

3. The fixed-pattern noise elimination apparatus according to claim 1, comprising a memory that stores the first and second dark currents each in linear form.

4. The fixed-pattern noise elimination apparatus according to claim 3,
   wherein the third dark current is in linear form, and
   wherein the fixed-pattern noise elimination apparatus
   calculates a temperature coefficient based on a ratio of the first dark current to the third dark current, and
   subtracts an arithmetic product of the second dark current and the temperature coefficient from a signal obtained by linearly processing a signal based on the signal outputted from the effective pixel of the solid-state image sensor during image sensing.

5. The fixed-pattern noise elimination apparatus according to claim 4,
   wherein there are provided
   a first period during which the temperature coefficient is calculated and
   a second period during which the arithmetic product of the second dark current and the temperature coefficient is subtracted from the signal obtained by linearly processing the signal based on the signal outputted from the effective pixel of the solid-state image sensor during image sensing, and
   wherein the fixed-pattern noise elimination apparatus repeats the first and second periods alternately.

6. The fixed-pattern noise elimination apparatus according to claim 1, comprising a memory that stores the first and second dark currents each in logarithmic form.

7. The fixed-pattern noise elimination apparatus according to claim 6,
   wherein the third dark current is in logarithmic form, and

wherein the fixed-pattern noise elimination apparatus
calculates a temperature coefficient based on a difference between the first dark current and the third dark current, and subtracts a signal obtained by linearizing a sum of the second dark current and the temperature coefficient from a signal obtained by linearly processing a signal based on the signal outputted from the effective pixel of the solid-state image sensor during image sensing.

8. The fixed-pattern noise elimination apparatus according to claim 7,
wherein there are provided
a first period during which the temperature coefficient is calculated and
a second period during which the signal obtained by linearizing the sum of the second dark current and the temperature coefficient is subtracted from the signal obtained by linearly processing the signal based on the signal outputted from the effective pixel of the solid-state image sensor during image sensing, and
wherein the fixed-pattern noise elimination apparatus repeats the first and second periods alternately.

9. The fixed-pattern noise elimination apparatus according to claim 1, wherein the light-shielded pixel is arranged in a pixel array.

10. The fixed-pattern noise elimination apparatus according to claim 1, wherein the light-shielded pixel is arranged outside a pixel array.

11. The fixed-pattern noise elimination apparatus according to claim 10,
wherein the light-shielded pixel is sized larger than a pixel arranged inside a pixel array.

12. The fixed-pattern noise elimination apparatus according to claim 10,
wherein the light-shielded pixel is sized smaller than a pixel arranged inside a pixel array.

13. The fixed-pattern noise elimination apparatus according to claim 1,
wherein
a dark current in a photoelectric element is replaced with a critical illuminance that depends on a value of the dark current in the photoelectric current,
a first dark current is replaced with a first critical illuminance,
a second dark current is replaced with a second critical illuminance, and
a third dark current is replaced with a third critical illuminance.

14. A solid-state image sensing apparatus comprising:
a solid-state image sensor; and
the fixed-pattern noise elimination apparatus according to any one of claims 1 to 13 that eliminates a fixed-pattern noise component resulting from dark current out of an image signal outputted from the solid-state image sensor.

15. An electronic appliance comprising the solid-state image sensing apparatus according to claim 14.

16. A fixed-pattern noise elimination program for making a computer function as the fixed-pattern noise elimination apparatus according to any one of claims 1 to 13.

# FIG.1

# FIG.2

# FIG.3

FIG.3

COMPENSATION DATA MEMORY — 6

73

GAIN COMPENSATOR — 72

73C

73G

73D

73H

73J ⊖ +

TEMPERATURE COEFFICIENT MEMORY

73F

73K ⊕

LINEARIZER

73A

73B ⊖ +

EP 1 986 424 A1

18

# FIG.4

EP 1 986 424 A1

# FIG.5

63

FRAME
MEMORY

73

72

GAIN
COMPENSATOR

LINEARIZER

73A

+
−

73B

## FIG.6A

## FIG.6B

# FIG.6C

GB    GB    GB    GB    GB

# FIG.6D

Gs Gs Gs Gs Gs

| INTERNATIONAL SEARCH REPORT | International application No. |
|---|---|
| | PCT/JP2006/324434 |

A. CLASSIFICATION OF SUBJECT MATTER
*H04N5/335(2006.01)i*

According to International Patent Classification (IPC) or to both national classification and IPC

B. FIELDS SEARCHED

Minimum documentation searched (classification system followed by classification symbols)
H04N5/335

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 6-178212 A  (Olympus Optical Co., Ltd.), | 1,3-5,9, |
|   | 24 June, 1994 (24.06.94), | 14-16 |
| Y | Par. Nos. [0001] to [0029]; Figs. 1 to 4 | 2,6-8,10-12 |
| A | (Family: none) | 13 |
|   |  |  |
| Y | JP 2003-324657 A  (Honda Motor Co., Ltd.), | 2,6-8 |
|   | 14 November, 2003 (14.11.03), |  |
|   | Par. Nos. [0001] to [0092]; Figs. 1 to 34 |  |
|   | & US 2005/0285959 A1    & WO 2003/094110 A1 |  |
|   |  |  |
| Y | JP 2003-189191 A  (Honda Motor Co., Ltd.), | 2,6-8 |
|   | 04 July, 2003 (04.07.03), |  |
|   | Par. Nos. [0001] to [0092]; Figs. 1 to 28 |  |
|   | (Family: none) |  |

| ☒ | Further documents are listed in the continuation of Box C. | ☐ | See patent family annex. |
|---|---|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 March, 2007 (07.03.07) | 20 March, 2007 (20.03.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/324434 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 11-126894 A  (Hewlett-Packard Co.),<br>11 May, 1999 (11.05.99),<br>Par. Nos. [0018] to [0020]; Figs. 3, 4<br>& GB 2328338 A          & DE 19818975 A1 | 10 |
| Y | JP 2005-223133 A  (Canon Inc.),<br>18 August, 2005 (18.08.05),<br>Par. Nos. [0001] to [0056]; Figs. 1 to 8<br>(Family: none) | 11,12 |
| Y | JP 2003-134400 A  (Canon Inc.),<br>09 May, 2003 (09.05.03),<br>Par. Nos. [0001] to [0076]; Figs. 1 to 21<br>(Family: none) | 11,12 |
| A | JP 8-307775 A  (Canon Inc.),<br>22 November, 1996 (22.11.96),<br>Full text; Figs. 1 to 7<br>(Family: none) | 1-16 |
| A | JP 2005-130045 A  (Konica Minolta Photo Imaging<br>Kabushiki Kaisha),<br>19 May, 2005 (19.05.05),<br>Full text; Figs. 1 to 16<br>& US 2005/0083419 A1 | 1-16 |
| A | JP 9-181977 A  (Matsushita Electric<br>Industrial Co., Ltd.),<br>11 July, 1997 (11.07.97),<br>Full text; Figs. 1 to 10<br>(Family: none) | 1-16 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BHASKAR CHOUBEY ; SATOSHI AOYAMA ; DILEEPAN JOSEPH ; STEPHEN OTIM ; STEVE COLLINS.** An Electronic Calibration Scheme for Logarithmic CMOS Pixels. *Proceedings of the IEEE International Symposium on Circuits and Systems,* May 2004, vol. IV, 856-9